# EUROPÄISCHE PATENTSCHRIFT

(11) **EP 2 917 756 B1**
(45) Veröffentlichungstag und Bekanntmachung des Hinweises auf die Patenterteilung: **29.04.2020**
(21) Anmeldenummer: 13762865.7
(22) Anmeldetag: 18.09.2013
(51) Int. Cl.: G01S 7/481, G01S 17/93, G01S 17/02, G01S 7/497, G01S 7/487

(54) **ABTASTENDE OPTOELEKTRONISCHE DETEKTIONSEINRICHTUNG MIT EINER DETEKTIONSSCHWELLE, KRAFTFAHRZEUG UND ENTSPRECHENDES VERFAHREN**
SCANNING OPTOELECTRONIC DETECTION DEVICE WITH A DETECTION THRESHOLD, MOTOR VEHICLE AND CORRESPONDING METHOD
DISPOSITIF DE DÉTECTION OPTOÉLECTRONIQUE À BALAYAGE À SEUIL DE DÉTECTION, VÉHICULE AUTOMOBILE ET PROCÉDÉ AFFÉRENT

(30) Priorität: 08.11.2012 DE 102012021831
(43) Veröffentlichungstag der Anmeldung: 16.09.2015
(73) Patentinhaber: Valeo Schalter und Sensoren GmbH, 74321 Bietigheim-Bissingen (DE)
(72) Erfinder: KOEHLER, Michael, 22529 Hamburg (DE); BERGER, Patrick, 21244 Buchholz (DE)
(74) Vertreter: Withopf, Kristina
(86) Internationale Anmeldenummer: PCT/EP2013/069371
(87) Internationale Veröffentlichungsnummer: WO 2014/072105

(56) Entgegenhaltungen:
- EP-A1- 0 345 383
- EP-A1- 1 162 478
- EP-A1- 2 287 630
- WO-A1-2006/050570
- WO-A2-2008/071167
- US-A- 4 411 521

## Beschreibung

Die Erfindung betrifft eine abtastende optoelektronische Detektionseinrichtung, insbesondere einen Laserscanner, für ein Kraftfahrzeug, mit einem optischen Sender zum Aussenden elektromagnetischer Strahlen in einen Umgebungsbereich des Kraftfahrzeugs, mit einem optischen Empfänger zum Empfangen von im Umgebungsbereich reflektierten Strahlen und zum Bereitstellen eines elektrischen Empfangssignals abhängig von den empfangenen Strahlen, und mit einer Auswerteeinrichtung zum Detektieren eines Zielobjekts im Umgebungsbereich abhängig von dem elektrischen Empfangssignal. Der Sender ist dazu ausgebildet, für eine Vielzahl von unterschiedlichen Abtastwinkeln innerhalb eines gesamten Abtastwinkelbereiches, insbesondere in Azimutrichtung bzw. in horizontaler Richtung, jeweils einen Sendestrahl auszusenden. Die Auswerteeinrichtung ist dazu ausgelegt, für jeden Abtastwinkel die Höhe des Empfangssignals mit einer Detektionsschwelle zu vergleichen und das Zielobjekt abhängig von dem Vergleich zu detektieren. Die Erfindung betrifft außerdem ein Kraftfahrzeugs mit einer solchen Einrichtung, wie auch ein Verfahren zum Betreiben einer Detektionseinrichtung eines Kraftfahrzeugs.

Unterschiedlichste Fahrerassistenzsysteme zur Detektion von Objekten werden zunehmend im Automobilbereich eingesetzt, um den Fahrer beim Führen seines Kraftfahrzeugs zu unterstützen. Laser-basierte Systeme (auch unter der Bezeichnung "Lidar" bzw. "Light Detection and Ranging" bekannt) ermöglichen dabei die Erkennung von Objekten in einer relativ großen Reichweite bis über 100 m vom Fahrzeug mit einer sehr hohen Messgenauigkeit. Sie werden bevorzugt im vorderen Bereich des Fahrzeugs platziert, beispielsweise hinter der Windschutzscheibe oder aber am Kühlergrill, um u.a. die Zeit bis zum Aufprall (time to collision, TTC) zu ermitteln. Solche Systeme können aber auch in seitigen oder rückwärtigen Bereichen des Fahrzeugs platziert werden, um den Totwinkel bzw. rückwärtigen Verkehr zu überwachen.

Ein Laserscanner arbeitet nach dem Lichtlaufzeitprinzip und beinhaltet typischerweise einen optischen Sender, welcher kurze Laserimpulse aussendet, die über einen schwenkbaren Spiegel so abgelenkt werden, dass eine Abtastung des gesamten Sichtfelds innerhalb eines vorbestimmten Abtastwinkelbereiches stattfindet. Pro Abtastwinkel bzw. pro Winkelschritt wird dabei ein Laserimpuls ausgesendet. Im selben Winkelschritt, ohne dass der Spiegel bewegt wird, werden die reflektierten Strahlen mittels eines Empfängers empfangen, und es wird ein elektrisches Empfangssignal bereitgestellt. Dieses elektrische Empfangssignal wird analysiert. Werden Echos bzw. Pulse im Empfangssignal erkannt, so sind diese grundsätzlich auf Reflektionen des ausgesendeten Laserimpulses an Zielobjekten in der Umgebung zurückzuführen. Die Zeitdauer zwischen dem Aussenden des Laserimpulses und dem Empfangen des Echos ist proportional zur Distanz zum Objekt. Diese Laufzeit wird gemessen und als Ergebnis der Entfernungsmessung für diesen Winkelschritt abgelegt.

Ein Laserscanner für Kraftfahrzeuge ist beispielsweise aus dem Dokument DE 10 2010 047 984 A1 bekannt. Der abtastende optische Entfernungssensor umfasst einen Laser als optischen Sender, mindestens einen Detektor als optischen Empfänger sowie eine Umlenkeinheit, welche mit einem ersten Spiegel eine Laserstrahlung auf die zu vermessende Szene umlenkt und mit einem zweiten Spiegel die von Objekten zurück gestreuten Laserimpulse auf den mindestens einen Detektor umlenkt. Der erste und der zweite Spiegel sind auf einer gemeinsamen drehbaren Achse angeordnet, welche von einer Antriebseinheit angetrieben wird.

In der EP 2 287 630 A1 ist eine optoelektronische Erfassungsvorrichtung beschrieben, die dazu ausgebildet ist, ein Empfangssignal mit einem von mehreren vorgegebenen Schwellwertverläufen zu vergleichen.

Die EP 1 162 478 A1 offenbart ein Näherungswarnsystem für ein Fahrzeug.

Im Dokument EP 0 345 383 A1 ist ein Empfänger für optische Strahlung offenbart, der eine mechanische oder optische Anordnung aufweist, die für eine Winkelabhängigkeit der Empfindlichkeit des Empfängers sorgt.

In der WO 2008/071167 A2 ist ein Verfahren zum Bestimmen der Position eines Objekts mit einem Sensor offenbart.

In dem Patent US 4,411,521 ist eine Vorrichtung zum Detektieren von Laserstrahlung offenbart, die eine von einem Einfallswinkel abhängige Empfindlichkeit aufweist.

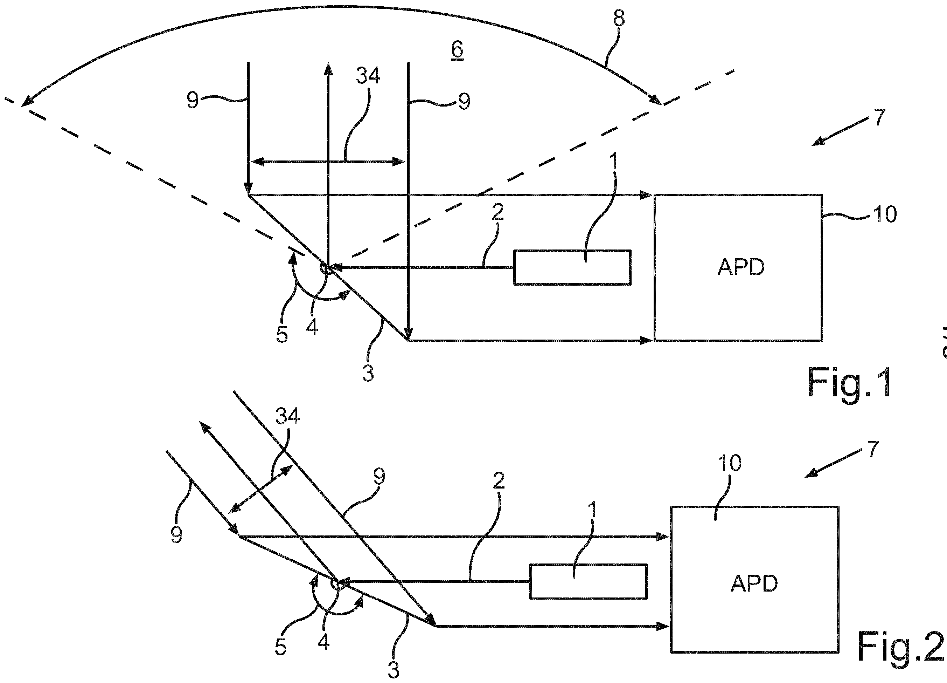

Ein beispielhafter Laserscanner ist in schematischer und abstrakter Darstellung auch in Fig. 1 dargestellt. Der Laserscanner hat einen optischen Sender, welcher eine Lichtquelle 1, insbesondere Laserquelle, zum Aussenden von Strahlen 2 sowie einen verschwenkbaren Spiegel 3 umfasst. Der Spiegel 3 kann um eine Schwenkachse 4 gemäß der Pfeildarstellung 5 verschwenkt werden, um die Strahlen 2 umzulenken. Ein Sichtfeld 6 der insgesamt mit 7 bezeichneten Detektionseinrichtung ist durch einen Abtastwinkelbereich 8, insbesondere in Azimutrichtung, definiert. Innerhalb dieses Abtastwinkelbereiches 8 wird das Sichtfeld 6 mit der Detektionseinrichtung 7 abgetastet, wobei für eine Vielzahl von unterschiedlichen Abtastwinkeln innerhalb des Abtastwinkelbereiches 8 schrittweise jeweils ein Strahlimpuls ausgesendet wird. Werden die Strahlen 2 reflektiert, so empfängt die Detektionseinrichtung 7 reflektierte Strahlen 9, welche - z.B. durch denselben Spiegel 3 - auf einen Photodetektor bzw. Empfänger 10 umgelenkt werden. Ausführungsformen ohne Umlenkung der reflektierten Strahlen 9 oder mit einem separaten Spiegel sind ebenfalls möglich.

Zwischen zwei benachbarten Abtastwinkeln und somit zwischen zwei zeitlich benachbarten Schüssen liegt eine Zeitspanne, die von der Scanfrequenz und der Winkelauflösung abhängt. Diese Zeitspanne ist deutlich größer als die Laufzeit vom Aussenden des Pulses bis zur Rückkehr eines Empfangspulses in der maximalen Messentfernung, welche üblicherweise zwischen 200 und 400 m liegt. Bei einer Scanfrequenz von beispielsweise 25 Hz und einer Winkelauflösung von 0,25° liegen zwischen zwei Schüssen und somit zwischen der Schrittbewegung des Spiegels 3 insgesamt 27 µs. Eine Entfernung von beispielsweise 327 m entspricht einer Laufzeit des Lichts von lediglich ca. 2,2 µs, so dass zwischen dem Abschluss der Messung auf einem Winkelschritt und dem Beginn der nächsten Messung auf dem nächsten Winkelschritt eine Zeitspanne von ca. 23 µs verbleibt.

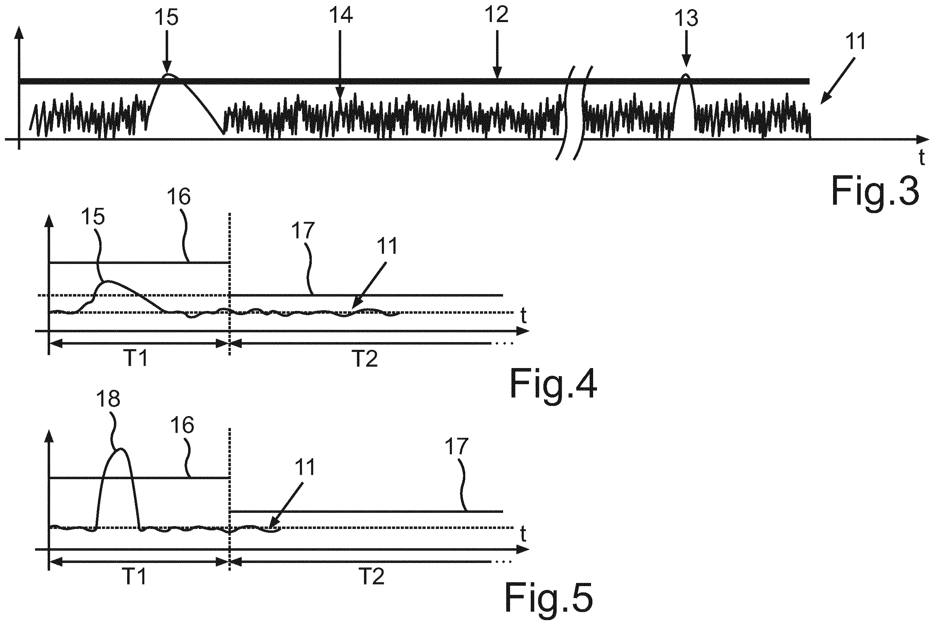

Ein Laserscanner besitzt abhängig von seinem optischen Aufbau einen dedizierten Empfindlichkeitsverlauf über die Entfernung. Die Empfindlichkeit im Nahbereich ist dabei oft um mehrere Zehnerpotenzen höher als in großer Entfernung bzw. im Fernbereich. Dies kann zur Detektion von virtuellen, fiktiven Zielobjekten führen, die tatsächlich nicht existieren: Grundsätzlich wird angestrebt, auch schlecht reflektierende Ziele in großer Entfernung zu detektieren. Deshalb soll die Empfindlichkeit des Laserscanners grundsätzlich hoch gewählt werden, damit auch solche schwach reflektierenden Ziele in großer Entfernung detektiert werden können. Ein entsprechend empfindlicher Messaufbau führt jedoch zwangsläufig auch dazu, dass an fiktiven Zielen, wie Regen und/oder Nebel und/oder Gischt und/oder Abgas und/oder Schmutz auf einer Abdeckscheibe reflektierte Strahlen mit einer relativ hohen Energie durch den Empfänger empfangen und dann als echte Zielobjekte interpretiert werden. Diese Reflexionen weisen nämlich eine solchermaßen hohe Energie auf, dass sie oberhalb der Detektionsschwelle liegen. Würde man diese Detektionsschwelle erhöhen, um der beschriebenen Problematik entgegenzuwirken, so würde es zu einer reduzierten Empfindlichkeit des Empfängers im Fernbereich führen, und schwach reflektierende Zielobjekte in großer Entfernung könnten nicht mehr detektiert werden. Diese Problematik ist in Fig. 3 anhand eines Verlaufs eines elektrischen Empfangssignals 11 über der Zeit t veranschaulicht. Eine Detektionsschwelle 12 wird entsprechend gering eingestellt, damit auch echte Zielobjekte aus großer Entfernung detektiert werden können. Ein solches Zielecho 13 des Empfangssignals 11 liegt dann über der Detektionsschwelle 12 und kann somit durch die Auswerteeinrichtung detektiert werden. Das Rauschen 14 des Empfangssignals 11 liegt dabei unterhalb der Detektionsschwelle 13. Eine solche niedrige Detektionsschwelle 13 führt jedoch zwangsläufig auch dazu, dass fiktive Zielechos 15 im Nahbereich detektiert werden, welche von fiktiven Zielen, wie Regen/Nebel/Gischt/Abgas/Schmutz stammen. Mit einer solchen Detektionsschwelle 12 können diese Ziele nicht ausgeblendet werden.

Die Erkennung bzw. Ausblendung solcher atmosphärischer Störungen unter Beibehaltung einer relativ hohen Messreichweite basiert im Stand der Technik auf der Verwendung mehrerer Detektionsschwellen unterschiedlicher Höhe. Im Nahbereich, der besonders sensibel hinsichtlich Messungen auf atmosphärische Störungen ist, kommt eine höhere erste Detektionsschwelle zum Einsatz. Diese Detektionsschwelle wird so gewählt, dass Signale atmosphärischer Störungen diese erhöhte Detektionsschwelle im Nahbereich nicht übersteigen. Für die Fernbereichsmessung wird dabei eine zweite Detektionsschwelle verwendet, welche beispielsweise der Detektionsschwelle 12 gemäß Fig. 3 entspricht. Ein beispielhaftes Empfangssignal 11 mit einer ersten Detektionsschwelle 16 für den Nahbereich und einer zweiten Detektionsschwelle 17 für den Fernbereich ist in Fig. 4 dargestellt. Während eines ersten Zeitintervalls T1 nach Aussenden eines Sendestrahls kommt die erste Detektionsschwelle 16 zum Einsatz. Das erste Zeitintervall T1 entspricht beispielsweise einem Nahbereich von 15 m vom Kraftfahrzeug. Auf das erste Zeitintervall T1 folgt dann unmittelbar ein zweites Zeitintervall T2, in welchem die zweite Detektionsschwelle 17 verwendet wird. Die beiden Schwellen 16, 17 werden jeweils auf einen konstanten Wert eingestellt, wobei die erste Schwelle 16 höher als die zweite Schwelle 17 ist. Wie aus Fig. 4 hervorgeht, wird nun ein Zielecho 15 von einer atmosphärischen Störung ausgeblendet, weil die Höhe dieses Zielechos 15 unterhalb der ersten Schwelle 16 liegt. Messungen auf echte Objekte besitzen in der Regel eine deutlich höhere Signalenergie und übersteigen auch die erhöhte erste Detektionsschwelle, wie dies in Fig. 5 anhand eines echten Zielechos 18 dargestellt ist.

Es hat sich jedoch herausgestellt, dass die Verwendung einer konstanten erhöhten Detektionsschwelle im Nahbereich zu suboptimalen Ergebnissen führt, weil bei unterschiedlichen Situationen das Zielecho 18 von einem echten Zielobjekt im Nahbereich aufgrund der erhöhten Detektionsschwelle 16 nicht detektiert werden kann.

Es ist Aufgabe der Erfindung, eine Lösung aufzuzeigen, wie bei einer Detektionseinrichtung der eingangs genannten Gattung einerseits die Empfindlichkeit, insbesondere im Nahbereich, im Vergleich zum Stand der Technik erhöht werden kann und andererseits auch sichergestellt werden kann, dass Zielechos ausgeblendet werden können, die von atmosphärischen Störungen stammen.

Diese Aufgabe wird erfindungsgemäß durch eine Detektionseinrichtung, durch ein Kraftfahrzeug sowie durch ein Verfahren mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Eine erfindungsgemäße abtastende optoelektronische Detektionseinrichtung, insbesondere Laserscanner, ist zur Detektion eines Zielobjektes in der Umgebung eines Kraftfahrzeugs ausgebildet. Die Detektionseinrichtung umfasst einen optischen Sender zum Aussenden elektromagnetischer Strahlen, wobei der Sender dazu ausgebildet ist, ein Sichtfeld der Detektionseinrichtung, insbesondere in Azimutrichtung bzw. in horizontaler Richtung, abzutasten und hierbei für eine Vielzahl von unterschiedlichen Abtastwinkeln innerhalb eines gesamten Abtastwinkelbereiches jeweils einen Sendestrahl auszusenden, insbesondere jeweils einen Laserimpuls. Die Detektionseinrichtung hat auch einen optischen Empfänger, welcher zum Empfangen von in der Umgebung reflektierten Strahlen und zum Bereitstellen eines elektrischen Empfangssignals abhängig von den empfangenen Strahlen ausgebildet ist. Eine elektronische Auswerteeinrichtung detektiert das Zielobjekt abhängig von dem elektrischen Empfangssignal. Die Auswerteeinrichtung ist dabei dazu ausgelegt, für jeden Abtastwinkel das Empfangssignal mit einer Detektionsschwelle zu vergleichen und das Zielobjekt abhängig von dem Vergleich zu detektieren. Die Detektionsschwelle ist eine winkelabhängige Schwellwertfunktion, welche für zumindest zwei unterschiedliche Abtastwinkel des Senders voneinander unterschiedliche Schwellwerte für das Empfangssignal aufweist.

Erfindungsgemäß wird demnach vorgeschlagen, statt einer für alle Abtastwinkel konstanten Detektionsschwelle eine solche Schwelle für das Empfangssignal vorzusehen, bei welcher für zumindest zwei unterschiedliche Abtastwinkel, insbesondere für eine Vielzahl größer 2 von unterschiedlichen Abtastwinkeln, die jeweiligen Schwellwerte voneinander unterschiedlich sind, mit denen die Höhe des Empfangssignals jeweils im Hinblick auf die Detektion eines Zielobjektes verglichen wird. Auf diese Weise gelingt es, einerseits die maximal mögliche Empfindlichkeit der Detektionseinrichtung, insbesondere im Nahbereich, zu ermöglichen und andererseits auch zu gewährleisten, dass Scheinechos ausgeblendet werden können, welche von atmosphärischen Störungen stammen, wie beispielsweise Nebel und/oder Gischt und/oder Regen und/oder Abgase und dergleichen. Die Erfindung basiert dabei auf der Erkenntnis, dass im Stand der Technik nicht berücksichtigt wird, dass eine abtastende Detektionseinrichtung, insbesondere ein Laserscanner, je nach optischem Aufbau über den gesamten Abtastwinkelbereich eine variierende Empfindlichkeit besitzen kann. Während bei manchen Abtastwinkeln des Senders die Empfindlichkeit relativ hoch ist, ist bei anderen Abtastwinkeln die Empfindlichkeit der Detektionseinrichtung deutlich geringer. Dies ist insbesondere darauf zurückzuführen, dass je nach Abtastwinkel unterschiedliche Querschnitte des Spiegels für die Umlenkung der in der Umgebung reflektierten Strahlen zur Verfügung stehen. Bei einem geringeren Querschnitt des Spiegels ist die empfangene Energie der Strahlen somit bei einer gegebenen Entfernung geringer als bei einem größeren Querschnitt. Bei einem geringeren Querschnitt sollte deshalb entsprechend ein geringerer Schwellwert für das Empfangssignal definiert werden, um sicherstellen zu können, dass echte Zielobjekte detektiert werden können.

Der optische Sender kann z.B. eine Lichtquelle, insbesondere einen Laser, aufweisen. Als Quelle kann z.B. eine Diode eingesetzt werden. Der Sender kann auch einen Spiegel umfassen, mittels welchem die ausgesendeten Strahlen umgelenkt werden. Der Spiegel kann schwenkbar gelagert sein. Unterschiedliche Winkelstellungen des Spiegels entsprechen dann unterschiedlichen Abtastwinkeln innerhalb des Abtastwinkelbereiches. Der Sender ist vorzugsweise zum Aussenden jeweils eines Strahlimpulses, insbesondere eines Laserimpulses, für jeden Abtastwinkel ausgebildet.

Der Empfänger kann ein oder mehrere Empfangselemente, insbesondere Photodioden und/oder Phototransistoren, umfassen. Als Empfangselemente können insbesondere Avalanche-Halbleiterelemente eingesetzt werden, insbesondere Avalanche-Photodioden. Im Empfangsstrahlengang kann auch der genannte oder ein separater Spiegel angeordnet sein, mittels welchem die in der Umgebung reflektierten Strahlen in Richtung zum Empfänger umgelenkt werden.

Es erweist sich als besonders vorteilhaft, wenn die winkelabhängige Schwellwertfunktion über den gesamten Abtastwinkelbereich entsprechend einer sich über den Abtastwinkelbereich ändernden bzw. winkelabhängigen Messempfindlichkeitsfunktion des optischen Empfängers entspricht, welche eine Empfindlichkeit des Empfängers für unterschiedliche Abtastwinkel angibt. Diese winkelabhängige Schwellenfunktion kann die Form einer quadratischen Funktion aufweisen, welche insbesondere für die mittleren Abtastwinkel ein Maximum aufweist und in Richtung zu den beiden seitlichen Abtastwinkeln in Randbereichen des Abtastwinkelbereiches abfällt. Allgemein hängt die Winkelabhängigkeit über trigonometrische Zusammenhänge vom Winkel ab. Das kann für unterschiedlich gestaltete optische Aufbauten anders sein. Somit kann also gewährleistet werden, dass auch echte Zielobjekte im Randbereich des Abtastwinkelbereiches bzw. im Randbereich des Sichtfeldes der Detektionseinrichtung zuverlässig detektiert werden können, also gerade dort, wo die Empfindlichkeit der Detektionseinrichtung gering ist.

Beispielsweise ist für jeden oder jeden n-ten Abtastwinkel jeweils ein unterschiedlicher Schwellwert der Detektionsschwelle vorgegeben. n kann dabei in einem Wertebereich von 2 bis 10 liegen.

Vorzugsweise ist die Auswerteeinrichtung dazu ausgelegt, innerhalb eines ersten Zeitintervalls nach Aussenden eines Sendestrahls durch den Sender (für einen bestimmten Abtastwinkel) das elektrische Empfangssignal zunächst mit einer für eine Nahbereichsmessung vorgesehenen ersten Detektionsschwelle zu vergleichen und innerhalb eines auf das erste Zeitintervall folgenden zweiten Zeitintervalls das elektrische Empfangssignal mit einer für eine Fernbereichsmessung vorgesehenen zweiten Detektionsschwelle zu vergleichen. Es können also insgesamt zwei Detektionsschwellen vorgesehen sein, nämlich einerseits eine erste Detektionsschwelle für die Nahbereichsmessung (z.B. bis zu einer Entfernung von 10 m bis 20 m vom Kraftfahrzeug, insbesondere bis zu einer Entfernung von 15 m) und andererseits eine zweite Detektionsschwelle für die Fernbereichsmessung (z.B. ab 15 m). Die oben genannte winkelabhängige Schwellwertfunktion stellt dabei vorzugsweise die erste Detektionsschwelle dar, die für die Nahbereichsmessung vorgesehen ist. Es hat sich nämlich herausgestellt, dass gerade im Nahbereich bis zu etwa 15 m vom Kraftfahrzeug die atmosphärischen Störungen und gegebenenfalls auch Schmutz und dergleichen besonders problematisch im Hinblick auf die Erzeugung von Scheinechos sind. In diesem Nahbereich soll also grundsätzlich eine höhere Detektionsschwelle definiert werden als im Fernbereich. Die erste Detektionsschwelle ist somit über den gesamten Abtastwinkelbereich bevorzugt höher als die zweite Detektionsschwelle.

Während die erste Detektionsschwelle - wie ausgeführt - durch die winkelabhängige Schwellwertfunktion gebildet ist, weist die zweite Detektionsschwelle in einer Ausführungsform einen über den gesamten Abtastwinkelbereich konstanten Verlauf auf, so dass für alle Abtastwinkel bevorzugt gleiche Schwellwerte für das Empfangssignal bei der Fernbereichsmessung vorgegeben sind.

Alternativ kann jedoch auch vorgesehen sein, dass auch die zweite Detektionsschwelle, welche für die Fernbereichsmessung angewendet wird, eine winkelabhängige Schwellwertfunktion ist, welche für eine Mehrzahl von unterschiedlichen Abtastwinkeln des Senders voneinander unterschiedliche Schwellwerte für das Empfangssignal aufweist. Somit kann auch die zweite Detektionsschwelle an den winkelabhängigen Empfindlichkeitsverlauf des Empfängers gegebenenfalls angepasst werden.

Es kann auch vorgesehen sein, dass ausschließlich für eine Untermenge der Abtastwinkel, insbesondere für jeden n-ten Abtastwinkel, die erste und die zweite Detektionsschwelle und für die übrigen Abtastwinkel ausschließlich die zweite Detektionsschwelle sowohl für die Nahbereichsmessung als auch für die Fernbereichsmessung angewendet wird. n stellt dabei eine ganze Zahl aus einem Wertebereich von 2 bis 10 dar. Somit reduziert sich der Aufwand bei der Umschaltung zwischen den beiden Schwellen, da nicht bei allen Abtastwinkeln zwischen den beiden Schwellen umgeschaltet werden muss und die Auflösung des Systems im Nahbereich keine so große Rolle wie im Fernbereich darstellt.

Ein erfindungsgemäßes Kraftfahrzeug umfasst eine erfindungsgemäße Detektionseinrichtung. Das Kraftfahrzeug ist bevorzugt ein Personenkraftwagen.

Die Erfindung betrifft auch ein Verfahren zum Betreiben einer abtastenden optoelektronischen Detektionseinrichtung, welches die Merkmale des unabhängigen Verfahrensanspruchs aufweist.

Die mit Bezug auf die erfindungsgemäße Detektionseinrichtung vorgestellten bevorzugten Ausführungsformen und deren Vorteile gelten entsprechend für das erfindungsgemäße Kraftfahrzeug sowie für das erfindungsgemäße Verfahren.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels sowie unter Bezugnahme auf die beigefügten Zeichnungen näher erläutert. Es zeigen:
- Fig. 1: in schematischer und abstrakter Darstellung eine Detektionseinrichtung gemäß einer Ausführungsform;
- Fig. 2: in schematischer Darstellung die Detektionseinrichtung gemäß Fig. 1, wobei ein anderer Abtastwinkel eines Spiegels eingestellt ist, um unterschiedliche wirksame Querschnitte eines Spiegels zu veranschaulichen;
- Fig. 3 bis Fig. 5: beispielhafte zeitliche Verläufe eines elektrischen Empfangssignals mit Detektionsschwellen;
- Fig. 6: eine beispielhafte winkelabhängige Empfindlichkeitsfunktion des Empfängers;
- Fig. 7: eine winkelabhängige Schwellwertfunktion gemäß einer Ausführungsform der Erfindung, wobei die Schwellwertfunktion an die Empfindlichkeitsfunktion angepasst ist; und
- Fig. 8: ein Blockschaltbild einer Detektionseinrichtung gemäß einer Ausführungsform der Erfindung.

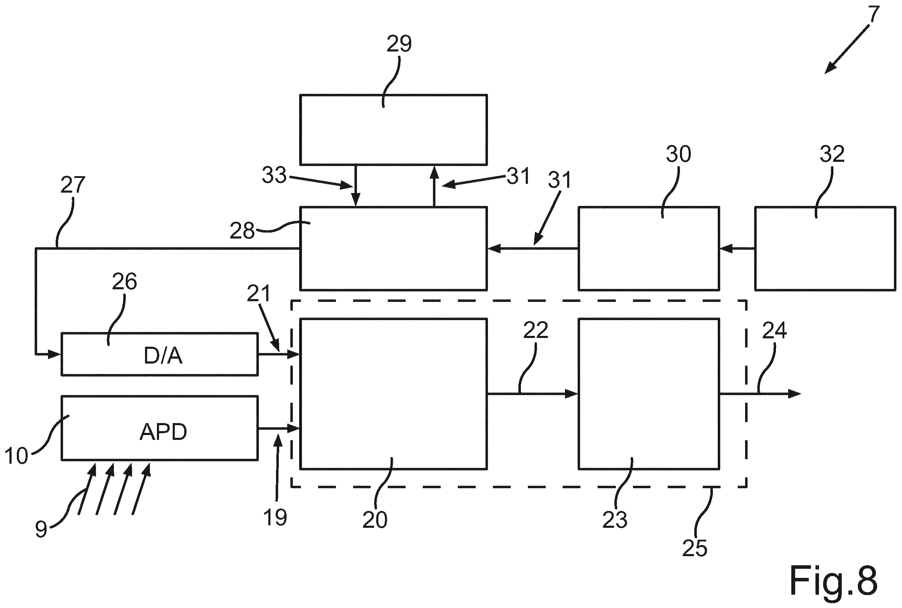

Bezug nehmend auf Fig. 8 umfasst eine Detektionseinrichtung 7 einen Empfänger 10, der als Avalanche-Photodetektor ausgebildet ist. In den Empfänger 10 ist auch eine Verstärkerschaltung integriert. Der Empfänger 10 empfängt die in der Umgebung reflektierten Strahlen 9 und stellt ein analoges elektrisches Empfangssignal 19 bereit, dessen Höhe abhängig von der Energie der Strahlen 9 ist. Das elektrische Empfangssignal wird einem analogen Komparator 20 zugeführt, welcher außerdem ein analoges Schwellwertsignal 21 empfängt. Dieses Schwellwertsignal 21 stellt - abhängig von dem jeweiligen Zeitintervall T1, T2 gemäß den Fig. 4 und 5 - abwechselnd die erste Detektionsschwelle 16 oder die zweite Detektionsschwelle 17 dar. Der Komparator 20 gibt an seinem Ausgang ein binarisiertes elektrisches Empfangssignal 22 aus, welches einer Einheit 23 zugeführt wird, welche abhängig von dem Empfangssignal 22 die Entfernung vom Zielobjekt misst. Entfernungsmesswerte 24 werden am Ausgang der Einheit 23 ausgegeben. Der Komparator 20 und die Einheit 23 bilden insgesamt eine elektronische Auswerteeinrichtung 25.

Das analoge Schwellwertsignal 21 wird mittels eines Digital-Analog-Wandlers 26 aus einem digitalen Schwellwertsignal 27 bereitgestellt und an den Komparator 20 abgegeben. Zur Bereitstellung des digitalen Schwellwertsignals 27 ist eine Steuereinrichtung 28 vorgesehen, welche mit einem Speicher 29 in Verbindung steht. In dem Speicher 29 ist eine Tabelle abgelegt, in welcher jedem Abtastwinkel des Senders oder jedem n-ten Abtastwinkel jeweils ein unterschiedlicher Schwellwert für den Komparator 20 zugeordnet ist. Die Steuereinrichtung 28 empfängt von einem Winkelencoder 30 den aktuellen Abtastwinkel 31 in Azimutrichtung. Der Winkelencoder 30 steht dabei mit einem Scanmotor 32 in Verbindung, der zum Verschwenken des Spiegels 3 gemäß Fig. 1 ausgebildet ist. Für den aktuellen Abtastwinkel 31 liest die Steuereinrichtung 28 aus dem Speicher 29 den zugeordneten Schwellwert 33 aus und erzeugt das digitale Schwellwertsignal 27, welches den aktuellen winkelabhängigen Schwellwert 33 charakterisiert.

Folglich liegt am Komparator 20 ein Schwellwertsignal 21 an, dessen Höhe dem aktuellen Schwellwert entspricht, der für den aktuellen Abtastwinkel individuell gewählt ist.

Die winkelabhängige Schwellwertfunktion wird vorzugsweise für die Nahbereichsmessung verwendet, d.h. für das erste Zeitintervall T1 gemäß den Fig. 4 und 5. Optional kann jedoch auch die zweite Detektionsschwelle 17 für das zweite Zeitintervall T2 bzw. für die Fernbereichsmessung winkelabhängig bzw. abhängig von dem aktuellen Abtastwinkel eingestellt werden.

Die winkelabhängige Einstellung der Detektionsschwelle 16 beruht darauf, dass die Empfindlichkeit des Empfängers 10 auch winkelabhängig ist und über den gesamten Abtastwinkelbereich 8 variiert. Bezug nehmend auf die Fig. 1 und 2 ist für jeden Abtastwinkel des Senders ein unterschiedlicher Querschnitt des Spiegels 3 aus der Sicht der empfangenen Strahlen 9 gegeben, wie dies in den Fig. 1 und 2 insgesamt mit 34 angedeutet ist. Dies bedeutet, dass bei unterschiedlichen Abtastwinkeln voneinander unterschiedliche Querschnitte 34 des Spiegels 3 für die in der Umgebung reflektierten Strahlen 9 zur Verfügung stehen. Somit ist für jeden Abtastwinkel eine unterschiedliche Energie der Strahlen 9 gegeben.

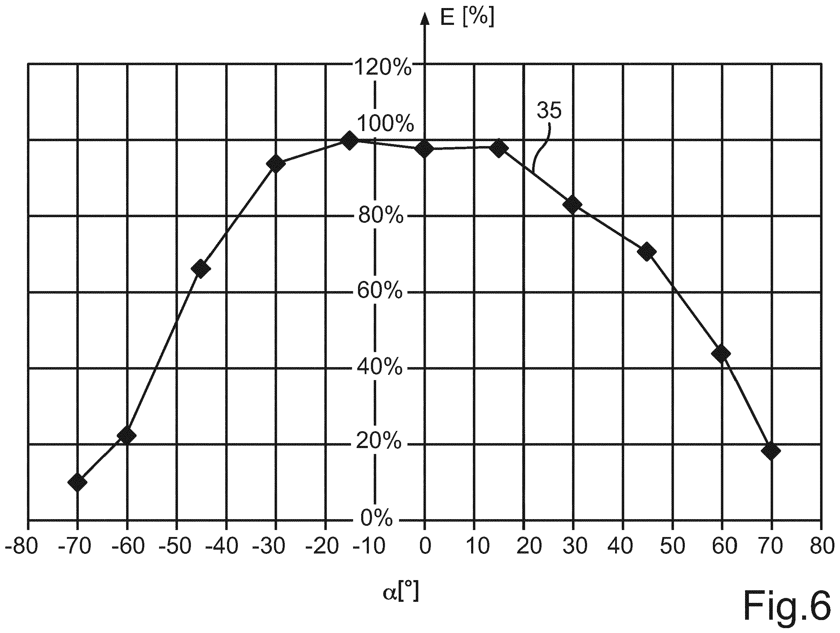

Die Detektionseinrichtung 7 weist also eine winkelabhängige (in Azimutrichtung) Empfindlichkeitsfunktion auf. Eine beispielhafte Empfindlichkeitsfunktion 35 ist in Fig. 6 dargestellt. Diese Funktion 35 ist normiert bzw. stellt eine relative Empfindlichkeitsfunktion dar. Wie aus Fig. 6 hervorgeht, hat die Funktion 35 im Wesentlichen bzw. annähernd den Verlauf einer quadratischen Funktion mit einem Maximum im mittleren Bereich des Abtastwinkelbereiches 8. Auf der x-Achse ist dabei der Abtastwinkel α aufgetragen, während auf der y-Achse die relative Empfindlichkeit E in % aufgetragen ist. In den jeweiligen Randbereichen des gesamten azimutalen Abtastwinkelbereiches 8 ist die Empfindlichkeit am geringsten.

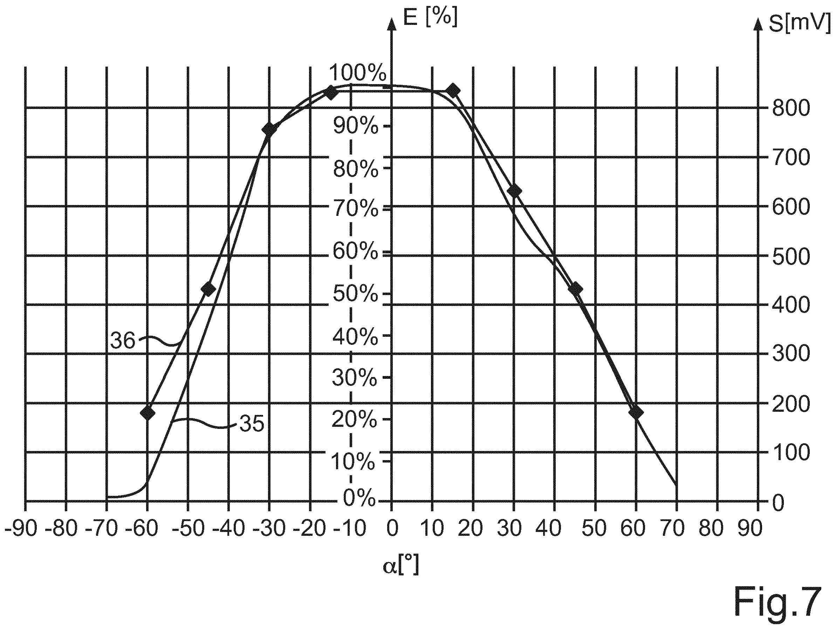

Die winkelabhängige Schwellwertfunktion für die Detektionsschwelle 16 wird nun an den Verlauf der Empfindlichkeitsfunktion 35 angepasst. In Fig. 7 ist eine Gegenüberstellung der Empfindlichkeitsfunktion 35 mit einer winkelabhängigen Schwellwertfunktion 36 dargestellt. Die auf der rechten Seite dargestellte Skala (in mV) gilt für die Schwellwertfunktion 36 und gibt somit die Höhe der Schwellwerte S in mV an. Wie aus Fig. 7 hervorgeht, entspricht der Verlauf der Schwellwertfunktion 36 dem der Empfindlichkeitsfunktion 35, so dass sich die beiden Verläufe zumindest annähernd überdecken. Die beiden Funktionen sind auch bezüglich des Abtastwinkels 0° im Wesentlichen symmetrisch und fallen auf den beiden Seiten gleichmäßig ab.

## Patentansprüche

1. Abtastende optoelektronische Detektionseinrichtung (7), die als Laserscanner ausgebildet ist, für ein Kraftfahrzeug, mit einem optischen Sender (1, 3) zum Aussenden elektromagnetischer Strahlen (2), mit einem optischen Empfänger (10) zum Empfangen von an einem Zielobjekt in einer Umgebung des Kraftfahrzeugs reflektierten Strahlen (9) und zum Bereitstellen eines elektrischen Empfangssignals (19) abhängig von den empfangenen Strahlen (9), und mit einer Auswerteeinrichtung (25) zum Detektieren des Zielobjekts abhängig von dem elektrischen Empfangssignal (19), wobei der Sender (1, 3) dazu ausgebildet ist, für eine Vielzahl von unterschiedlichen Abtastwinkeln (α) innerhalb eines gesamten Abtastwinkelbereichs (8) jeweils einen Sendestrahl (2) auszusenden, und wobei die Auswerteeinrichtung (25) dazu ausgelegt ist, für jeden Abtastwinkel (α) das Empfangssignal (19) mit einer Detektionsschwelle (16, 17) zu vergleichen und das Zielobjekt abhängig von dem Vergleich zu detektieren,
**dadurch gekennzeichnet, dass**
die Detektionsschwelle (16, 17) eine winkelabhängige Schwellwertfunktion (36) ist, welche für zumindest zwei unterschiedliche Abtastwinkel (α) des Senders (1, 3) voneinander unterschiedliche Schwellwerte (S) für das Empfangssignal (19) aufweist.

2. Detektionseinrichtung (7) nach Anspruch 1,
**dadurch gekennzeichnet, dass**
der Verlauf der Schwellwertfunktion (36) dem Verlauf einer winkelabhängigen Empfindlichkeitsfunktion (35) des Empfängers (10) entspricht, welche eine Empfindlichkeit (E) des Empfängers (10) für unterschiedliche Abtastwinkel (α) angibt.

3. Detektionseinrichtung (7) nach Anspruch 1 oder 2,
**dadurch gekennzeichnet, dass**
die Auswerteeinrichtung (25) dazu ausgelegt ist, innerhalb eines ersten Zeitintervalls (T1) nach Aussenden eines Sendestrahls (2) durch den Sender (1, 3) das elektrische Empfangssignal (19) mit einer für eine Nahbereichsmessung vorgesehenen ersten Detektionsschwelle (16) zu vergleichen und innerhalb eines auf das erste Zeitintervall (T1) folgenden zweiten Zeitintervalls (T2) das elektrische Empfangssignal (19) mit einer für eine Fernbereichsmessung vorgesehenen zweiten Detektionsschwelle (17) zu vergleichen, und dass die erste Detektionsschwelle (16) die winkelabhängige Schwellwertfunktion (36) ist.

4. Detektionseinrichtung (7) nach Anspruch 3,
**dadurch gekennzeichnet, dass**
ausschließlich die erste Detektionsschwelle (16) eine winkelabhängige Schwellwertfunktion (36) ist.

5. Detektionseinrichtung (7) nach Anspruch 3,
**dadurch gekennzeichnet, dass**
auch die zweite Detektionsschwelle (17) eine winkelabhängige Schwellwertfunktion (36) ist.

6. Detektionseinrichtung (7) nach einem der Ansprüche 3 bis 5,
**dadurch gekennzeichnet, dass**
die Auswerteeinrichtung (25) dazu ausgelegt ist, ausschließlich für eine Untermenge der Abtastwinkel (α), insbesondere für jeden n-ten Abtastwinkel (α), die erste und die zweite Detektionsschwelle (16, 17) und für übrige Abtastwinkel (α) ausschließlich die zweite Detektionsschwelle (17) sowohl für die Nahbereichsmessung als auch für die Fernbereichsmessung anzuwenden, wobei n eine ganze Zahl aus einem Wertebereich von 2 bis 10 ist.

7. Kraftfahrzeug mit einer Detektionseinrichtung (7) nach einem der vorhergehenden Ansprüche.

8. Verfahren zum Betreiben einer abtastenden optoelektronischen Detektionseinrichtung (7), die als Laserscanner ausgebildet ist, eines Kraftfahrzeugs, bei welchem mittels eines optischen Senders (1, 3) elektromagnetische Strahlen (2) ausgesendet werden, mittels eines optischen Empfänger (10) an einem Zielobjekt in einer Umgebung des Kraftfahrzeugs reflektierte Strahlen (9) empfangen und ein elektrisches Empfangssignal (19) abhängig von den empfangenen Strahlen (9) bereitgestellt werden, und mittels einer Auswerteeinrichtung (25) das Zielobjekt abhängig von dem elektrischen Empfangssignal (19) detektiert wird, wobei der Sender (1, 3) für eine Vielzahl von unterschiedlichen Abtastwinkeln (α) innerhalb eines gesamten Abtastwinkelbereichs (8) jeweils einen Sendestrahl (2) aussendet, und wobei die Auswerteeinrichtung (25) für jeden Abtastwinkel (α) das Empfangssignal (19) mit einer Detektionsschwelle (16, 17) vergleicht und das Zielobjekt abhängig von dem Vergleich detektiert,
**dadurch gekennzeichnet, dass**
als Detektionsschwelle (16, 17) eine winkelabhängige Schwellwertfunktion (36) vorgegeben wird, bei welcher für zumindest zwei unterschiedliche Abtastwinkel (α) des Senders (1, 3) voneinander unterschiedliche Schwellwerte (S) für das Empfangssignal (19) vorgegeben werden.

## Claims

1. Scanning optoelectronic detection device (7), designed as a laser scanner, for a motor vehicle, having an optical transmitter (1, 3) for transmitting electromagnetic beams (2), having an optical receiver (10) for receiving beams (9) reflected from a target object in surroundings of the motor vehicle and for providing an electrical reception signal (19) on the basis of the received beams (9), and having an evaluation device (25) for detecting the target object on the basis of the electrical reception signal (19), wherein the transmitter (1, 3) is designed to transmit a respective transmission beam (2) for a multiplicity of different scanning angles (α) within an overall scanning angle range (8), and wherein the evaluation device (25) is designed, for each scanning angle (α), to compare the reception signal (19) with a detection threshold (16, 17) and to detect the target object on the basis of the comparison,
**characterized in that**
the detection threshold (16, 17) is an angle-dependent threshold function (36) that has different threshold values (S) for the reception signal (19) for at least two different scanning angles (α) of the transmitter (1, 3).

2. Detection device (7) according to Claim 1,
**characterized in that**
the profile of the threshold value function (36) corresponds to the profile of an angle-dependent sensitivity function (35) of the receiver (10) that specifies a sensitivity (E) of the receiver (10) for different scanning angles (α).

3. Detection device (7) according to Claim 1 or 2,
**characterized in that**
the evaluation device (25) is designed to compare the electrical reception signal (19) with a first detection threshold (16), provided for a short-range measurement, within a first time interval (T1) following the transmission of a transmission beam (2) by the transmitter (1, 3), and to compare the electrical reception signal (19) with a second detection threshold (17), provided for a long-range measurement, within a second time interval (T2) following the first time interval (T1), and **in that** the first detection threshold (16) is the angle-dependent threshold value function (36) .

4. Detection device (7) according to Claim 3,
**characterized in that**
only the first detection threshold (16) is an angle-dependent threshold value function (36).

5. Detection device (7) according to Claim 3,
**characterized in that**
the second detection threshold (17) is also an angle-dependent threshold value function (36).

6. Detection device (7) according to one of Claims 3 to 5,
**characterized in that**
the evaluation device (25) is designed to use the first and the second detection threshold (16, 17) only for a subset of the scanning angles (α), in particular for each nth scanning angle (α) and, for the rest of the scanning angles (α), to use only the second detection threshold (17) both for the short-range measurement and for the long-range measurement, wherein n is an integer from a value range from 2 to 10.

7. Motor vehicle having a detection device (7) according to one of the preceding claims.

8. Method for operating a scanning optoelectronic detection device (7), designed as a laser scanner, of a motor vehicle, in which electromagnetic beams (2) are transmitted by way of an optical transmitter (1, 3), beams (9) reflected from a target object in surroundings of the motor vehicle are received by way of an optical receiver (10) and an electrical reception signal (19) is provided on the basis of the received beams (9), and the target object is detected on the basis of the electrical reception signal (19) by way of an evaluation device (25), wherein the transmitter (1, 3) transmits a respective transmission beam (2) for a multiplicity of different scanning angles (α) within an overall scanning angle range (8), and wherein the evaluation device (25), for each scanning angle (α), compares the reception signal (19) with a detection threshold (16, 17) and detects the target object on the basis of the comparison,
**characterized in that**
an angle-dependent threshold value function (36) is predefined as detection threshold (16, 17), in which different threshold values (S) are predefined for the reception signal (19) for at least two different scanning angles (α) of the transmitter (1, 3).

## Revendications

1. Dispositif de détection (7) optoélectronique à balayage, réalisé sous la forme d'un système de balayage à laser, pour un véhicule automobile, comprenant un émetteur optique (1, 3) destiné à émettre des rayons électromagnétiques (2), comprenant un récepteur optique (10) destiné à recevoir des rayons (9) réfléchis sur un objet cible dans un environnement du véhicule automobile et destiné à fournir un signal de réception électrique (19) en fonction des rayons (9) reçus, et comprenant un dispositif d'interprétation (25) destiné à détecter l'objet cible en fonction du signal de réception électrique (19), l'émetteur (1, 3) étant configuré pour émettre respectivement un rayon d'émission (2) pour une pluralité d'angles de balayage (α) différents à l'intérieur d'une plage d'angles de balayage (8) totale, et le dispositif d'interprétation (25) étant conçu, pour chaque angle de balayage (α), pour comparer le signal de réception (19) avec un seuil de détection (16, 17) et détecter l'objet cible en fonction de la comparaison,
**caractérisé en ce que**
le seuil de détection (16, 17) est une fonction de valeur de seuil (36) dépendante de l'angle qui présente, pour au moins deux angles de balayage (α) différents de l'émetteur (1, 3), des valeurs de seuil (S) différentes l'une de l'autre pour le signal de réception (19).

2. Dispositif de détection (7) selon la revendication 1,
**caractérisé en ce que** le tracé de la fonction de valeur de seuil (36) correspond au tracé de la fonction de sensibilité (35) dépendante de l'angle du récepteur (10), laquelle indique la sensibilité (E) du récepteur (10) pour différents angles de balayage (α).

3. Dispositif de détection (7) selon la revendication 1 ou 2, **caractérisé en ce que** le dispositif d'interprétation (25) est conçu pour, à l'intérieur d'un premier intervalle de temps (T1) après l'émission d'un rayon d'émission (2) par l'émetteur (1, 3), comparer le signal de réception électrique (19) à un premier seuil de détection (16) prévu pour une mesure dans la zone de proximité et, à l'intérieur d'un deuxième intervalle de temps (T2) qui suit le premier intervalle de temps (T1), comparer le signal de réception électrique (19) à un deuxième seuil de détection (17) prévu pour une mesure dans la zone lointaine, et **en ce que** le premier seuil de détection (16) est la fonction de valeur de seuil (36) dépendante de l'angle.

4. Dispositif de détection (7) selon la revendication 3,
**caractérisé en ce que** seul le premier seuil de détection (16) est une fonction de valeur de seuil (36) dépendante de l'angle.

5. Dispositif de détection (7) selon la revendication 3,
**caractérisé en ce que** le deuxième seuil de détection (17) est lui aussi une fonction de valeur de seuil (36) dépendante de l'angle.

6. Dispositif de détection (7) selon l'une des revendications 3 à 5, **caractérisé en ce que** le dispositif d'interprétation (25) est conçu pour utiliser le premier et le deuxième seuil de détection (16, 17) exclusivement pour un sous-ensemble des angles de balayage (α), notamment pour chaque n-ième angle de balayage (α), et exclusivement le deuxième seuil de détection (17) pour les angles de balayage (α), à la fois pour la mesure dans la zone de proximité et pour la mesure dans la zone lointaine, n étant un nombre entier issu d'une plage de valeurs de 2 à 10.

7. Véhicule automobile comprenant un dispositif de détection (7) selon l'une des revendications précédentes.

8. Procédé pour faire fonctionner un dispositif de détection (7) optoélectronique à balayage, qui est réalisé sous la forme d'un système de balayage à laser, d'un véhicule automobile, avec lequel des rayons électromagnétiques (2) sont émis au moyen d'un émetteur optique (1, 3), des rayons (9) réfléchis sur un objet cible dans un environnement du véhicule automobile sont reçus par un récepteur optique (10) et un signal de réception électrique (19) est fourni par celui-ci en fonction des rayons (9) reçus, et l'objet cible est détecté en fonction du signal de réception électrique (19) au moyen d'un dispositif d'interprétation (25), l'émetteur (1, 3) émettant respectivement un rayon d'émission (2) pour une pluralité d'angles de balayage (a) différents à l'intérieur d'une plage d'angles de balayage (8) totale, et le dispositif d'interprétation (25), pour chaque angle de balayage (α), comparant le signal de réception (19) avec un seuil de détection (16, 17) et détectant l'objet cible en fonction de la comparaison,
**caractérisé en ce que**
le seuil de détection (16, 17) prédéfini est une fonction de valeur de seuil (36) dépendante de l'angle avec laquelle, pour au moins deux angles de balayage (α) différents de l'émetteur (1, 3), des valeurs de seuil (S) différentes l'une de l'autre sont prédéfinies pour le signal de réception (19).
